(19) Europäisches Patentamt / European Patent Office / Office européen des brevets

(11) **EP 4 177 774 A1**

(12) **EUROPEAN PATENT APPLICATION**

(43) Date of publication:
**10.05.2023 Bulletin 2023/19**

(21) Application number: **22200165.3**

(22) Date of filing: **07.10.2022**

(51) International Patent Classification (IPC):
**G06F 17/18** (2006.01)     **B60W 30/00** (2006.01)

(52) Cooperative Patent Classification (CPC):
**G06F 17/18;** B60W 30/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2021 SE 2151373**

(71) Applicant: **Volvo Autonomous Solutions AB**
**405 08 Göteborg (SE)**

(72) Inventors:
• **HAGVALL, Linus**
**418 74 Göteborg (SE)**
• **SANDBLOM, Fredrik**
**431 66 Mölndal (SE)**

(74) Representative: **Zacco Sweden AB**
**P.O. Box 5581**
**Löjtnantsgatan 21**
**114 85 Stockholm (SE)**

(54) **A METHOD FOR QUANTIFYING VEHICLE EGO STATE ESTIMATION PERFORMANCE**

(57) A method for quantifying vehicle ego state estimation performance, the method comprising;
obtaining samples of ego state estimation performance
$$p_i{}_{i=1}^{n-1},$$
selecting a subset of the ego state estimation performance samples such that the selected samples follow a pre-determined statistical extreme value distribution, parameterizing the pre-determined statistical extreme value distribution based on the selected samples of ego state estimation performance, and quantifying vehicle ego state estimation performance based on the parameterized statistical extreme value distribution.

FIG. 1

FIG. 4

## Description

### TECHNICAL FIELD

The present disclosure relates to methods, control units and vehicles for quantifying vehicle ego state estimation performance, i.e., how well various vehicle parameters relevant to vehicle control can be estimated. The methods disclosed herein find applications in, e.g., autonomous drive, advanced driver assistance systems, and other safety critical vehicle functions.

The invention can be applied in heavy-duty vehicles, such as trucks, semi-trailers and construction equipment. Although the invention will be described mainly with respect to a cargo transport type of vehicle, the invention is not restricted to this particular vehicle, but may also be used in other types of vehicles such as in construction equipment, busses and also in cars.

### BACKGROUND

Autonomous drive (AD) systems and other advanced driver assistance systems (ADAS) constantly make decisions on how to control an ego vehicle in order to fulfil a given objective while not subjecting the vehicle to risk. These decisions are based on a wide variety of different factors related both to the state of the ego vehicle, such as its mass and the current state of its tyres, but also to the surrounding environment and to the ability of the vehicle to perform different types of maneuvers.

When controlling a vehicle there are always uncertainties which need to be accounted for in order to not subject the vehicle to risk. These uncertainties include both uncertainties in vehicle state estimation and vehicle actuation uncertainties.

An AD system or ADAS operating on public roads is normally required to guarantee that the accident risk is at an acceptable level with high integrity. Implementing such systems typically requires realization of ego state estimators, i.e., estimators of various vehicle parameters relevant for the vehicle control, which are validated at very high performances. Traditional methods for performing validation and verification for these vehicle control components therefore typically involve a lot of testing on large amounts of data, which is both technically cumbersome, costly, and time consuming.

WO2021037329 A1 and WO2021037330 A1 relate to similar problems.

Still, there is a need for improved methods of quantifying ego state estimation performance which allow efficient modelling of rare events in a reliable manner.

### SUMMARY

It is an object of the present disclosure to provide methods for quantifying and modelling vehicle ego state estimation performance. This object is obtained by a method for quantifying vehicle ego state estimation performance. The method comprises obtaining samples of ego state estimation performance $p_i{}_{i=1}^{n-1}$, selecting a subset of the ego state estimation performance samples such that the selected samples follow a pre-determined statistical extreme value distribution, parameterizing the pre-determined statistical extreme value distribution based on the selected samples of ego state estimation performance, and quantifying vehicle ego state estimation performance based on the parameterized statistical extreme value distribution.

An important feature of the disclosed method is that the required amount of data that is needed in order to quantify vehicle ego state estimation performance is reduced. By allowing modelling of ego state estimation performance based on a reduced set of data, development and testing time is reduced, which is an advantage. Also, some types of analysis which were previously not possible to perform since they simply required too much data is now enabled by the disclosed methods.

For example, suppose a vehicle comprises means for estimating a current mass of the vehicle, which mass is a sum of the vehicle mass and its current cargo. The vehicle almost always estimates the mass accurately, but due to various circumstances, the mass estimate may sometimes, on rare occasions, be associated with large error. When this happens the safety of the vehicle may be jeopardized, since the vehicle control mechanisms will most likely not be able to handle this large error in the assumed vehicle mass. The methods disclosed herein provide tools for managing such rare events in vehicle state estimation.

The disclosed methods are applicable for both off-line and/or on-line processing, which is an advantage. On-line processing may, e.g., be used to complement more extensive off-line processing, leading to improved model verification and thus improved vehicle operation.

The pre-determined statistical extreme value distribution may, e.g., be a Generalized Pareto Distribution (GDP) or a Generalized Extreme Value distribution (GEV). These types of extreme value distributions have been extensively studied, which means that the disclosed methods can make use of well-known and robust analysis techniques, which is an advantage.

According to aspects, the method comprises measuring a time between exceedances metric indicating the time passed between ego state estimation performance samples exceeding a threshold $\zeta$, and monitoring operational design domain (ODD) based on the time between exceedances metric. This is a relatively simple metric to determine, yet it is a powerful indicator of when a vehicle is operating outside its ODD.

According to some examples, a sample of vehicle ego state estimation performance comprises performances in estimating any of; a steered wheel angle, a wheel slip angle, a tyre wear parameter, a tyre wear rate parameter, a tyre slip stiffness parameter, a vehicle unit mass, a vehicle energy consumption, a vehicle battery state of charge, temperature of an electric machine of the vehicle, and a global positioning system position fix. The samples of performance may, e.g., come from sensor data compared to ground truth data. Notably, these quantities are just examples, several additional examples can of course be given.

According to aspects, a sample of vehicle ego state estimation performance is determined separately for one or more parts of the vehicle. Different parts of the vehicle may be associated with different extreme value distributions, i.e., a trailer may not behave exactly like a tractor vehicle and should therefore preferably be treated separately from the tractor. Also, different axles on a vehicle, or different sets of wheels, may behave differently. By using separate samples of vehicle ego state estimation performance for different parts of a vehicle a more refined analysis can be conducted.

A sample of vehicle ego state estimation performance may, for example, be obtained dependent on any of; type of vehicle, type of vehicle combination, vehicle physical dimension parameters, weather condition, road friction, road geometry, and path trajectory geometry.

According to some aspects, the method also comprises quantifying the ego state estimation performance as a bounded model by bounding the performance to lie within a range $-\overline{w} \leq b_k \leq \overline{w}$ with probability greater than $1 - \gamma$, based on the pre-determined statistical extreme value distribution.

Bounds on ego state estimation performance enables risk assessment of various driving scenarios, both off-line and in real time. The bounded models obtained from the disclosed methods can also be used to decide, e.g., when to trigger an emergency maneuver by the vehicle.

According to some other aspects, the method further comprises determining a confidence value $\beta$ associated with the pre-determined statistical extreme value distribution.

This confidence value will be discussed in more detail below. It indicates the confidence obtained in the parameterized GEV or GDP, i.e., if the GEV or GDP can be accurately fitted to the available data or if more data is needed for a good fit.

According to some further aspects, the method comprises assessing a sufficiency of gathered ego state estimation performance data for vehicle modelling based on the confidence value $\beta$ associated with the pre-determined statistical extreme value distribution.

The methods disclosed herein also enable providing constructive feedback on when data collection for a given purpose is done, e.g., when a sufficient amount of data has been collected for quantifying ego state estimation performance in some scenario. For instance, according to aspects, the method comprises assessing a sufficiency of gathered model data for model correctness verification based on the confidence value $\beta$ associated

with the parameterized GEV or GDP.

The disclosed methods may optionally also comprise monitoring an operational design domain (ODD) associated with the vehicle by comparing the parameterized statistical extreme value distribution to a set of baseline distribution parameters, wherein operation outside the ODD is indicated by a difference between the parameterized statistical extreme value distribution parameters and the baseline distribution parameters.

In other words, yet another feature of the disclosed methods is that intermediate results can be used to construct a monitor of at least part of the ODD. These particular aspects are also applicable as a foundation for independent stand-alone methods not depending on the above discussed methods. Consequently, there is disclosed herein a method for monitoring an ODD associated with a vehicle. The method comprises obtaining a parameterized GEV or GDP from samples of vehicle ego state estimation performance during vehicle operation, like described herein or in some other way.

The method also comprises monitoring an ODD associated with the vehicle by comparing the parameterized GEV or GDP to a set of baseline GEV or GDP parameters, wherein operation outside the ODD is indicated by a difference between parameterized GEV or GDP parameters and baseline parameters.

There are furthermore disclosed herein control units, computer programs and vehicles associated with the same advantages as discussed above in connection to the different methods.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

With reference to the appended drawings, below follows a more detailed description of embodiments of the invention cited as examples. In the drawings:

Figure 1     schematically illustrates a vehicle;

Figure 2     shows an example thresholding operation;

Figure 3    shows another example thresholding operation;

Figure 4    illustrates a vehicle model;

Figure 5    is a flow chart illustrating methods;

Figure 6    schematically illustrates a control unit; and

Figure 7    shows an example computer program product.

## DETAILED DESCRIPTION OF EXAMPLE EMBODIMENTS OF THE INVENTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

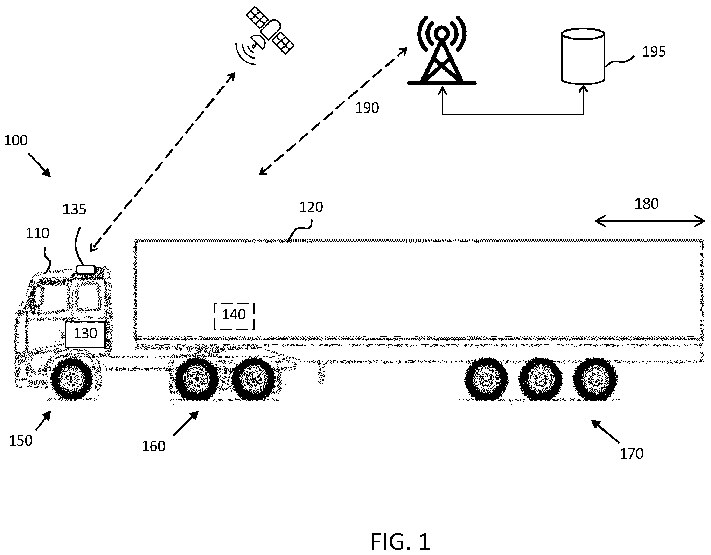

Figure 1 illustrates an example vehicle 100 for cargo transport where the herein disclosed techniques can be applied with advantage. The vehicle 100 comprises a tractor or towing vehicle 110 supported on front wheels 150 and rear wheels 160, at least some of which are driven wheels and at least some of which are steered wheels. Normally but not necessarily, all the wheels on the tractor are braked wheels. The tractor 110 is configured to tow a first trailer unit 120 supported on trailer wheels 170 by a fifth wheel connection in a known manner. The trailer wheels are normally braked wheels but may also comprise driven wheels on one or more axles. Some trailers also comprise steered wheels in order to improve maneuverability.

It is appreciated that the herein disclosed methods and control units can be applied with advantage also in other types of heavy-duty vehicles, such as trucks with drawbar connections, construction equipment, buses, and the like. The vehicle 100 may also comprise more than two vehicle units, i.e., a dolly vehicle unit may be used to tow more than one trailer.

The tractor 110 comprises a vehicle control unit (VCU) 130 for controlling various kinds of functionality, i.a. to achieve propulsion, braking, and steering based on an ego state of the vehicle. Some trailer units 120 also comprise a VCU 140 for controlling various functions of the trailer, such as braking of trailer wheels, and sometimes also trailer wheel propulsion and steering. The VCUs 130, 140 may be centralized or distributed over several processing circuits, often referred to as electronic control units (ECU). Parts of the vehicle control functions may also be executed remotely, e.g., on a remote server 195 connected to the vehicle 100 via wireless link and a wireless access network 190, or the like.

The control unit 130 may implement various types of support systems and systems for vehicle functional safety, such as advanced driver assistance systems (ADAS) and functions for autonomous drive (AD). These support systems base their operation on an estimate of the vehicle state.

The vehicle may be connected 190 to a processing device 195 arranged to perform off-line calculations to assist the vehicle control system comprising the control unit 130. The connection 190 is preferably wireless as shown in Figure 1 but may also be a wireline connection or a connection via some storage module such as a hard drive or the like.

A vehicle state vector, also known as a vehicle ego state, is a collection of variables which together describe a current state of the vehicle. The vehicle ego state comprises a number of parameters which affects the general handling of the vehicle, and how the vehicle is expected to respond to various forms of control input signals. These parameters may comprise a steered wheel angle, a wheel slip angle, a tyre wear parameter, a tyre wear rate parameter, a tyre slip stiffness parameter, a vehicle unit mass, a vehicle energy consumption, a vehicle battery state of charge, and a temperature of an electric machine of the vehicle. The samples of performance may, e.g., come from sensor data compared to ground truth data. The vehicle state is often represented as a vector of state variables x. As will be discussed in more detail below, an allowable vehicle state space may, in general, comprise both upper and lower limits on state variables such as lateral position for the duration of a maneuver.

Vehicle ego state parameters related to the tyres of the vehicle may be important for motion estimation and motion prediction. Parameters such as steered wheel angle and wheel slip angle are normally estimated with high accuracy, but large errors can be seen on some rare occasions. Also, tyre wear parameters, tyre wear rate parameters and tyre slip stiffness parameters may likewise be associated with large error on rare occasions.

An important parameter which can be catastrophic to estimate with large error I the vehicle mass. The vehicle mass affects vehicle behavior in many ways, and changes as cargo is loaded and unloaded from the vehicle. The normal forces acting on the tyres are also important parameters for determining expected vehicle behavior in response to some control input. The vehicle mass is normally estimated with high accuracy, but unfortunate combinations of circumstances which happen very rarely may cause large errors.

The same can be said for vehicle state parameters associated with vehicle energy consumption, vehicle battery state of charge, and temperature of an electric machine of the vehicle.

The VCU 130 is optionally connected to a satellite positioning system receiver 135, configured to determine a geographical position of the vehicle 100. This position may, e.g., be used to determine a location of the vehicle on a map, which can be obtained from the server 195 or pre-stored on a vehicle data memory device. The operational characteristics of this positioning system receiver can be considered part of the vehicle ego state. For instance, the satellite positioning system receiver 135 may provide position estimates associated with large error in certain environments which are rarely encountered.

The ego vehicle state may also comprise variables associated with vehicle location (coordinates) and orientation (such as, e.g., heading, steering angle and articulation angle). The vehicle state also comprises information associated with vehicle dynamic state, i.e., vehicle velocity, acceleration, turn rate, and so on.

The vehicle transitions between states based on issued control commands and other actions such as cargo loading and offloading. Vehicle state can often be bounded to lie within some set with high probability. Some vehicle state parameters change more slowly than others, such as tyre wear which changes relatively slow, while other parameters such as wheel slip angle may change very fast. But may still have a profound effect on vehicle behavior in response to various control commands and external environment factors.

Suppose densely sampled ego state estimation performance data has been obtained. Although it is possible to use this data directly to determine the occurrence rate for extreme instances of ego state estimation error or other discrepancies, it does not necessarily well capture the behavior of the vehicle. Instead, it is herein proposed to, optionally, filter the densely sampled data to extract a series of low dimensional aggregate samples describing the specific ego state estimation performance we are interested in modelling. For example, if the purpose is to quantify how often very large wheel sideslip angles occur when attempting to follow a given trajectory, then aggregate samples could be formed by first detecting instances of sideslip based on some criteria (e.g., thresholding), and then quantifying these instances using aggregate measures, e.g., a two-dimensional sample consisting of maximum sideslip or threshold value and the duration of time the parameter is above some threshold. A cumulative density function can also be used to describe aggregate behavior in terms of the relative percentage of time the parameter is above some value. The densely sampled data can also be replaced by, e.g., block maxima, block means, or block median values determined for consecutive blocks of the densely sampled data, thus provided less dense sampled data.

Extreme value theory (EVT) is an area of statistics which focuses on properties of rare events. EVT is discussed in, e.g., C. Scarrott and A. MacDonald, "A review of extreme value threshold estimation and uncertainty quantification," REVSTAT Statistical Journal, vol. 10, no. 1, 2012, and references cited therein.

In probability theory and statistics, the generalized extreme value (GEV) distribution is a family of continuous probability distributions developed within extreme value theory to combine the Gumbel, Frechet and Weibull families also known as type I, II and III extreme value distributions. By the extreme value theorem, the GEV distribution is the only possible limit distribution of properly normalized maxima of a sequence of independent and identically distributed random variables. It is noted that a limit distribution need not exist since this requires regularity conditions on the tail of the distribution. Despite this, the GEV distribution is often used as an approximation to model the maxima of long (finite) sequences of random variables. In some fields of application, the generalized extreme value distribution is known as the Fisher-Tippett distribution, named after Ronald Fisher and L. H. C. Tippett. However, usage of this name is sometimes restricted to mean the special case of the Gumbel distribution.

Peaks Over Threshold (POT) is a class of methods in EVT that model the extreme events that exceed some threshold. Under some assumptions the exceedances converge asymptotically to a so-called Generalized Pareto (GDP) distribution. For a specific data set, the exceedances can be used to estimate the parameters of a GDP distribution which in turn can be used to predict the likelihood of even rarer events. This enables statistical arguments on the limits of assumptions with significantly less data than traditional methods. The results from this analysis can also be used to verify that a set of assumptions does appear to hold true for the Operational Design Domain (ODD) where the data was collected. The ODD may, e.g., be characterized by maximum ego velocity, maximum road slope, maximum road banking, etc.

Furthermore, the assumptions can then be used when evaluating whether an ego vehicle can perform a certain action, i.e., is the action safe given the expected ego state estimation performance of the vehicle.

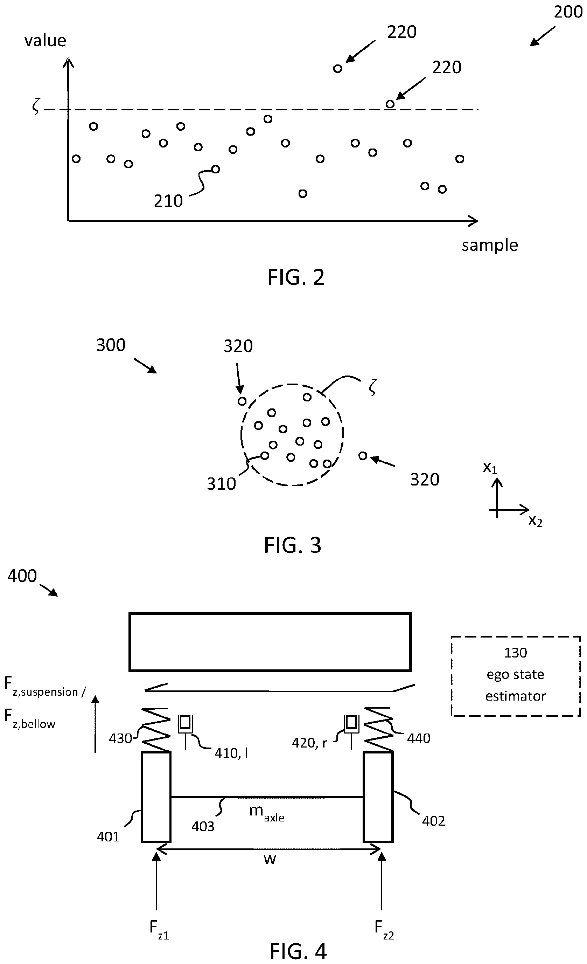

Figure 2 schematically illustrates a thresholding operation 200, where samples of ego state estimation performance 210, 220 have been collected. A threshold $\zeta$ is applied in order to select a subset of the ego state estimation performance samples such that the selected samples follow a pre-determined statistical extreme value distribution.

Figure 3 illustrates another thresholding operation 300, here in two dimensions $x_1$, $x_2$. Samples 310, 320 of ego state estimation performance have been collected. A threshold $\zeta$ is again applied in order to select a subset of the ego state estimation performance samples such that the selected samples follow a pre-determined statistical extreme value distribution.

Figure 4 schematically illustrates a vehicle wheel axle with a suspension system 430, 440. The suspension system comprises level sensors 410, 420 and resilient members 430, 440, e.g., bellows or springs, configured to output a reading indicating compression which can be converted into a compression force value

$F_{z,suspension}$. The compression value may, e.g., be a bellow pressure value $F_{z,bellow}$, an electromechanical suspension compression value or other compression force value associated with a suspension system of the vehicle 100. The two wheels 401, 402 are connected by an axle 403 with weight $m_{axle}$.

For the model in Figure 4, tyre normal force can be estimated based on a relationship

$$F_z = F_{z,suspension} + \frac{m_{axle}}{2g} + c_{roll} * \varphi$$

, where $F_z$ is tyre normal force, $F_{z,suspension}$ is a compression force associated with the suspension system such as a pressure value from suspension bellows, $m_{axle}$ is a mass of the wheel axle, $c_{roll}$ is a roll stiffness value associated with the wheel axle (also a vehicle ego state parameter), and $\varphi$ is a roll angle associated with the wheel axle (not shown in Figure 4). Note that forces over the actual suspension members have been neglected for simplicity in the above relationship. The roll angle $\varphi$ may, e.g., be given from level sensors as $\varphi = \frac{l-r}{w}$, where l is the left level sensor output, r is the right level sensor output, and w is track width of the vehicle.

The VCU 130 may implement an ego state estimator which operates according to the above principles for determining tyre normal force $F_z$. The estimate is likely to be reliable and accurate almost always, but sensor error or other rare unfortunate circumstances may contribute to large errors. The methods disclosed herein may be used with advantage to handle such rare events.

The parameters for the GEV and/or GDP distribution can also be used in order to create a monitor for certain aspects of the ODD, i.e., assumptions on vehicle ego state estimation performance. More specifically, if the current vehicle ego state estimation performance deviates from the GDP distribution (with more than a certain probability threshold), there is an indication of a risk that the ego vehicle is no longer within the defined ODD, and thus the ego vehicle may need to take precautionary measures. For instance, the tyre normal force may go outside of an acceptable range of tyre normal forces.

The ODD monitor is also the reason why it is possible to argue that the system will remain safe over time with regards to changing vehicle ego state estimation performance. This is because the system will be able to detect changes in ego state estimation performance before an extreme event occurs, which could lead to an accident.

It is noted that a benefit of using the methodology proposed herein is that there is no explicit need to observe ego state estimation errors where the assumptions are broken in order to detect that there is a risk that original ODD (i.e., original data collection) is no longer valid. It is enough to detect a distribution of semi rare events (these events are still within the ODD) which does not match the expected distribution.

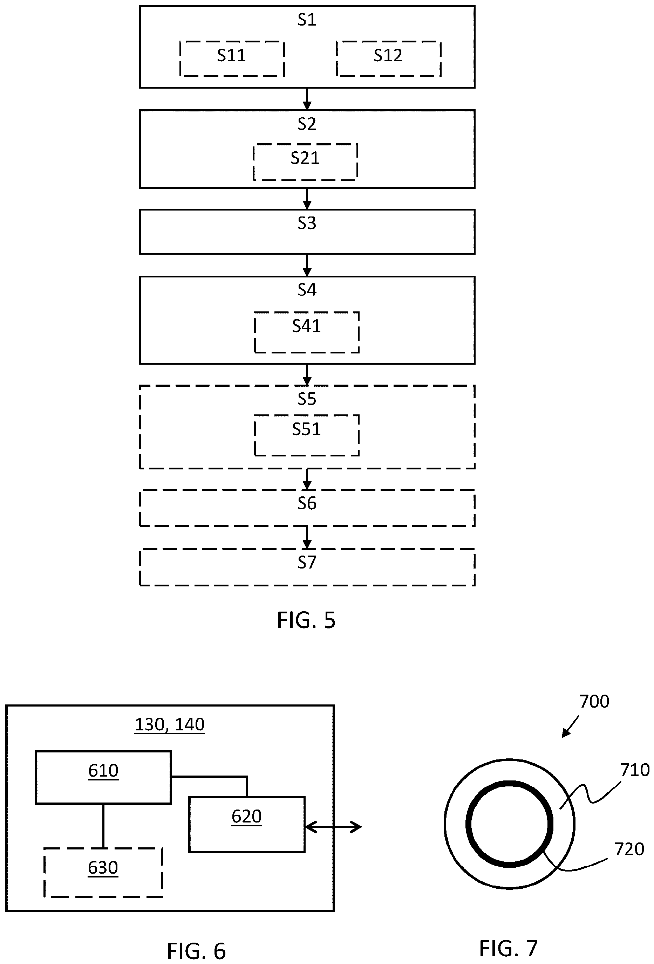

Figure 5 is a flow chart illustrating methods which summarize the discussions above. There is illustrated a method for quantifying vehicle ego state estimation performance. The method comprises obtaining S1 samples of ego state estimation performance $p_i{}_{i=1}^{n-1}$. The samples may, e.g., be obtained S11 as a previously stored set of samples or obtained S12 as a set of samples during operation of an ego vehicle 100.

A sample of ego state estimation performance may as discussed above also comprise performances in estimating a steered wheel angle, a wheel slip angle, a tyre wear parameter, a tyre wear rate parameter, a tyre slip stiffness parameter, a vehicle unit mass, a vehicle energy consumption, a vehicle battery state of charge, a temperature of an electric machine device, and a global positioning system position fix.

A sample of ego state estimation performance may as discussed above also comprise any of; lateral vehicle position, longitudinal vehicle position, absolute or squared vehicle position, lateral vehicle velocity, longitudinal vehicle velocity, absolute or squared vehicle velocity, lateral vehicle acceleration, longitudinal vehicle acceleration, absolute or squared vehicle acceleration, curvature, yaw rate, heading, and vehicle articulation angle. It is appreciated that this list is not exhaustive, further examples can be given.

According to some aspects, a sample of vehicle ego state estimation performance is determined separately for one or more parts of the vehicle. A vehicle part can be, e.g., a unit such as a trailer in a vehicle combination, or a vehicle part such as an axle or a pair of wheels.

According to some other aspects, a sample of vehicle ego state estimation performance is obtained dependent on any of; type of vehicle, type of vehicle combination, vehicle physical dimension parameters, weather condition, road friction, road geometry, and path trajectory geometry.

The method comprises selecting S2 a subset of the ego state estimation performance samples such that the selected samples follow a pre-determined statistical extreme value distribution. The pre-determined statistical extreme value distribution may, e.g., be a Generalized Pareto Distribution (GDP), or an instance of a Generalized Extreme Value distribution (GEV).

According to some aspects, the selecting comprises determining S21 a threshold $\zeta$ such that the samples of vehicle ego state estimation performance in excess of the threshold $\zeta$, $\{p_i : p_i \not\leq \zeta\}$, follow the pre-determined statistical extreme value distribution. Some example thresholds were illustrated in Figures 4 and 5 above. The thresholds may be fixed or dynamically adjusted based on some performance criterion.

The method further comprises parameterizing S3 the pre-determined statistical extreme value distribution based on the selected samples of ego state estimation performance, and quantifying S4 vehicle ego state estimation performance based on the parameterized statistical extreme value distribution. Methods for extreme value distribution parameterization are known and will therefore not be discussed in more detail herein.

According to some aspects, the method comprises measuring S7 a time between exceedances metric indicating the time passed between vehicle ego state estimation performance samples exceeding the threshold $\zeta$, and monitoring ODD based on the time between exceedances metric. This way is can be determined if the vehicle is operating in its ODD, or if traffic situation conditions have changed so much that the vehicle 100 is no longer operating in the intended ODD.

According to some aspects, the method comprises comprising quantifying S41 the vehicle ego state estimation performance as a bounded model by bounding the performance to lie within a range $-\overline{w} \le b_k \le \overline{w}$ with probability greater than $1 - \gamma$, based on the pre-determined statistical extreme value distribution.

According to some aspects, the method comprises determining S5 a confidence value $\beta$ associated with the pre-determined statistical extreme value distribution. The exceedances $b_i : b_i \nleq \zeta$ can be used to estimate the parameters of the GDP or GEV (with corresponding confidence). The identified distribution can in turn be used to find bounds on vehicle ego state estimation performance which are fulfilled with a confidence $\beta$. The vehicle ego state estimation performance model has a verified correctness of $\gamma$ with confidence value $\beta$, which confidence value $\beta$ is associated with the parameterized GEV or GDP. Methods for determining the confidence value $\beta$ are known and will not be discussed in more detail herein. The confidence value depends at least in part on the number of observations collected over the threshold $\zeta$ and provides constructive feedback on the needed amount of data. This way, it can be estimated when a sufficient data set has been gathered for modelling ego state estimation performance, and when more data is needed. An advantage of the disclosed methods is therefore that they can be used to assess a sufficiency of gathered model data for model correctness verification based on the confidence value $\beta$ associated with the parameterized GEV or GDP. Thus, if the confidence value $\beta$ is too low after the GEV or GDP has been parameterized, then more data may be needed in order to increase the confidence value. In other words, according to some aspects, the method comprises assessing S51 a sufficiency of gathered vehicle ego state estimation performance data for quantification based on the confidence value $\beta$ associated with the pre-determined statistical extreme value distribution.

According to some other aspects, the method comprises monitoring S6 an operational design domain, ODD, associated with the vehicle by comparing the parameterized pre-determined statistical extreme value distribution to a set of baseline distribution parameters, wherein operation outside the ODD is indicated by a difference between parameterized pre-determined statistical extreme value distribution parameters and the baseline distribution parameters.

Although the described vehicle ego state estimation performance modelling may be performed off-line (i.e., in a design phase), the identified GDP or GEV distribution can also be used to construct monitors of the ODD for on-line use as well. In particular, if vehicle ego state estimation performance samples are collected online, the distribution of the exceedances can be monitored. A significantly different distribution of exceedances compared to the distribution that was obtained offline indicates that the system is out of its ODD. In other words, by the disclosed techniques is becomes possible to monitor an ODD associated with the vehicle by comparing the parameterized GDP or GEV to a set of baseline GDP or GEV parameters. Operation outside the ODD is for instance indicated by a difference between parameterized GDP parameters and baseline GDP parameters. A warning signal or situation avoidance maneuver (SAM) may be triggered in case operation outside the ODD is detected.

A safe stop maneuver is an example of a SAM. However, SAMs may also comprise maintaining a constant velocity in a given lane or performing an obstacle avoidance maneuver. In general, the class of situation avoidance maneuvers comprise all maneuvers which can be executed to avoid undesired situations, such as detected risk situations. A SAM may however also relate to, e.g., a difficult parking situation or the like.

A simple monitor of this kind is to calculate the return period (i.e., the average time between exceedances) over some time window. A significant decrease of the return period is then an indication that the vehicle is operated outside of its ODD.

Figure 6 schematically illustrates, in terms of a number of functional units, the components of an example control unit 130, 140 according to an embodiment of the discussions herein. Processing circuitry 610 is provided using any combination of one or more of a suitable central processing unit CPU, multiprocessor, microcontroller, digital signal processor DSP, etc., capable of executing software instructions stored in a computer program product, e.g., in the form of a storage medium 630. The processing circuitry 610 may further be provided as at least one application specific integrated circuit ASIC, or field programmable gate array FPGA.

Particularly, the processing circuitry 610 is configured to cause the control unit 130, 140 to perform a set of operations, or steps, such as the methods discussed in connection to Figure 5. For example, the storage medium 630 may store the set of operations, and the processing circuitry 610 may be configured to retrieve the set of operations from the storage medium 630 to cause the control unit 130 to perform the set of operations. The set of operations may be provided as a set of executable instructions. Thus, the processing circuitry 610 is thereby arranged to execute methods as herein disclosed.

The storage medium 630 may also comprise persistent storage, which, for example, can be any single one or combination of magnetic memory, optical memory, solid state memory or even remotely mounted memory.

The control unit 130 may further comprise an interface 620 for communications with at least one external device, such as the remote server 195 and/or on-board vehicle systems. As such the interface 620 may comprise one or more transmitters and receivers, comprising analogue and digital components and a suitable number ports for wireline or wireless communication.

The processing circuitry 610 controls the general operation of the control unit 130, 140, e.g., by sending data and control signals to the interface 620 and the storage medium 630, by receiving data and reports from the interface 620, and by retrieving data and instructions from the storage medium 630. Other components, as well as the related functionality, of the control node are omitted in order not to obscure the concepts presented herein.

Figure 7 schematically illustrates a computer program product 700, comprising digital media 710 with a set of operations 720 executable by the control unit 130. The set of operations 710 may be loaded into the storage medium 630 in the control unit 130. The set of operations may correspond to the methods discussed above in connection to Figure 5.

In the example of Figure 7, the computer program product 700 is illustrated as an optical disc, such as a CD (compact disc) or a DVD (digital versatile disc) or a Blu-Ray disc. The computer program product could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program is here schematically shown as a track on the depicted optical disk, the computer program can be stored in any way which is suitable for the computer program product.

**Claims**

1. A method performed by a control unit (130) for controlling a vehicle (100) based on a quantified vehicle ego state estimation performance, the method comprising;

   obtaining (S1) samples of ego state estimation performance $p_i{}_{i=1}^{n-1}$,
   selecting (S2) a subset of the ego state estimation performance samples such that the selected samples follow a pre-determined statistical extreme value distribution,
   parameterizing (S3) the pre-determined statistical extreme value distribution based on the selected samples of ego state estimation performance, and
   quantifying (S4) vehicle ego state estimation performance based on the parameterized statistical extreme value distribution, and
   controlling the vehicle (100) based on the quantified vehicle ego state estimation performance.

2. The method according to claim 1, wherein the obtaining comprises obtaining (S11) a previously stored set of vehicle ego state estimation performance samples.

3. The method according to any of claims 1-2, wherein the obtaining comprises obtaining (S12) a set of vehicle ego state estimation performance samples during operation of an ego vehicle (100).

4. The method according to any previous claim, wherein the selecting comprises determining (S21) a threshold $\zeta$ such that the samples of vehicle ego state estimation performance in excess of the threshold $\zeta$, $\{p_i : p_i \nleq \zeta\}$, follow the pre-determined statistical extreme value distribution.

5. The method according to claim 4, comprising measuring (S7) a time between exceedances metric indicating the time passed between vehicle ego state estimation performance samples exceeding the threshold $\zeta$, and monitoring ODD based on the time between exceedances metric.

6. The method according to any previous claim, wherein the pre-determined statistical extreme value distribution is a Generalized Pareto Distribution, GDP.

7. The method according to any previous claim, wherein the pre-determined statistical extreme value distribution is a Generalized Extreme Value distribution, GEV.

8. The method according to any previous claim, wherein a sample of vehicle ego state estimation performance comprises performances in estimating any of; a steered wheel angle, a wheel slip angle, a tyre wear parameter, a tyre wear rate parameter, a tyre slip stiffness parameter, a vehicle unit mass, a vehicle energy consumption, a vehicle battery state of charge, a temperature of an electric machine device, and a global positioning system position fix.

9. The method according to claim 8, wherein a sample of vehicle ego state estimation performance is determined separately for one or more parts of the vehicle.

10. The method according to any previous claim, wherein a sample of vehicle ego state estimation performance is obtained dependent on any of; type of vehicle, type of vehicle combination, vehicle physical dimension parameters, number of vehicle axles, weather condition, road friction, road geometry, and weather conditions.

11. The method according to any previous claim, comprising quantifying (S41) the vehicle ego state estimation performance as a bounded model by bounding the performance to lie within a range $-\overline{w} \leq b_k \leq \overline{w}$ with probability greater than 1 - $\gamma$, based on the pre-determined statistical extreme value distribution.

12. The method according to any previous claim, comprising determining (S5) a confidence value $\beta$ associated with the pre-determined statistical extreme value distribution.

13. The method according to claim 12, comprising assessing (S51) a sufficiency of gathered vehicle ego state estimation performance data for performance quantification based on the confidence value $\beta$ associated with the pre-determined statistical extreme value distribution.

14. The method according to any previous claim, comprising monitoring (S6) an operational design domain, ODD, associated with the vehicle by comparing the parameterized pre-determined statistical extreme value distribution to a set of baseline distribution parameters, wherein operation outside the ODD is indicated by a difference between parameterized pre-determined statistical extreme value distribution parameters and the baseline distribution parameters.

15. A computer program (800) comprising program code means for performing the steps of any of claims 1-14 when said program is run on a computer or on processing circuitry (710) of a control unit (130).

16. A computer readable medium (810) carrying a computer program (820) comprising program code means for performing the steps of any of claims 1-14 when said program product is run on a computer or on processing circuitry (710) of a control unit (130).

17. A control unit (130) for quantifying vehicle ego state estimation performance, the control unit (130) being configured to perform the steps of the method according to any of claims 1-14.

18. A vehicle (100) comprising a control unit (130) according to claim 17.

FIG. 1

EP 4 177 774 A1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

Application Number

EP 22 20 0165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2021/037330 A1 (VOLVO TRUCK CORP [SE]) 4 March 2021 (2021-03-04) * pages 1, 2, 8; claims 1-18 * ----- | 1-18 | INV. G06F17/18 B60W30/00 |
| A | ASLJUNG DANIEL ET AL: "Using Extreme Value Theory for Vehicle Level Safety Validation and Implications for Autonomous Vehicles", IEEE TRANSACTIONS ON INTELLIGENT VEHICLES, IEEE, vol. 2, no. 4, 1 December 2017 (2017-12-01), pages 288-297, XP011675264, ISSN: 2379-8858, DOI: 10.1109/TIV.2017.2768219 [retrieved on 2017-12-18] sections I, II, IV; * abstract * ----- | 1-18 | |
| A | FEDERICO ORSINI ET AL: "Collision prediction in roundabouts: a comparative study of extreme value theory approaches", TRANSPORTMETRICA A: TRANSPORT SCIENCE, vol. 15, no. 2, 5 September 2018 (2018-09-05), pages 556-572, XP055692829, ISSN: 2324-9935, DOI: 10.1080/23249935.2018.1515271 sections 2, 3; * abstract * ----- | 1-18 | TECHNICAL FIELDS SEARCHED (IPC) B60W G06F |

The present search report has been drawn up for all claims

| Place of search | Date of completion of the search | Examiner |
|---|---|---|
| Berlin | 15 March 2023 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 20 0165

15-03-2023

| Patent document cited in search report | Publication date | Patent family member(s) | Publication date |
|---|---|---|---|
| WO 2021037330 A1 | 04-03-2021 | CN 114222987 A | 22-03-2022 |
| | | EP 4018338 A1 | 29-06-2022 |
| | | JP 2022552062 A | 15-12-2022 |
| | | KR 20220045232 A | 12-04-2022 |
| | | US 2022289232 A1 | 15-09-2022 |
| | | WO 2021037330 A1 | 04-03-2021 |

## REFERENCES CITED IN THE DESCRIPTION

**Patent documents cited in the description**

- WO 2021037329 A1

- WO 2021037330 A1

**Non-patent literature cited in the description**

- **C. SCARROTT ; A. MACDONALD.** A review of extreme value threshold estimation and uncertainty quantification. *REVSTAT Statistical Journal,* 2012, vol. 10 (1